# EUROPÄISCHE PATENTANMELDUNG

(11) **EP 1 536 541 A1**
(43) Veröffentlichungstag der Anmeldung: **01.06.2005**
(21) Anmeldenummer: 03104358.1
(22) Anmeldetag: 25.11.2003
(51) Int. Cl.: H02J 15/00, F02C 6/16

(54) **Anlage und Verfahren zur Nutzung regenerativer Energieformen mit nichtsteuerbarer Leistungsverfügbarkeit**

(71) Anmelder: Alstom Technology Ltd, 5400 Baden (CH)
(72) Erfinder: Althaus, Rolf, 9230, Flawil (CH); Koller, Martin, 5316, Gippingen (CH)

(57) **Zusammenfassung**

Die vorliegende Erfindung betrifft eine Anlage zur Nutzung regenerativer Energieformen, deren Leistungsverfügbarkeit nichtsteuerbar ist, umfassend
- eine Regenerativwandelvorrichtung zum Umwandeln von regenerativer Leistung in mechanische und/oder elektrische Leistung, wobei die Verfügbarkeit der regenerativen Leistung nichtsteuerbar ist,
- eine Komprimiervorrichtung (21) zum Komprimieren eines Speichergases mittels der mechanischen und/oder elektrischen Leistung,
- eine Speichervorrichtung (22) zum Speichern des komprimierten Speichergases und
- eine Entspannungsvorrichtung (23) zum Entspannen des komprimierten Speichergases unter Abgabe einer mechanischen und/oder elektrischen Leistung.

## Beschreibung

### Technisches Gebiet

Die vorliegende Erfindung betrifft eine Anlage sowie ein Verfahren zur Nutzung regenerativer Energieformen mit nichtsteuerbarer Leistungsverfügbarkeit.

### Stand der Technik

Aus unterschiedlichen Gründen wird die Nutzung alternativer, nicht fossiler und CO₂-neutraler sowie regenerativer Energieformen immer stärker angestrebt. Auf der einen Seite gehen Bestrebungen dahin, Brennstoffe aus natürlich nachwachsender Biomasse zu gewinnen. Derartige Brennstoffe können in einer entsprechenden Kraftwerksanlage gesteuert verbrannt werden. Auf der anderen Seite kann auch die Nutzung von Wasserkraft bzw. die auf dieser Grundlage realisierbare Stromerzeugung gesteuert und bedarfsabhängig abgerufen werden. Im vorliegenden Zusammenhang werden diese Energieformen als Regenerativenergien mit steuerbarer Leistungsverfügbarkeit bezeichnet.

Alternativ hierzu können auch andere regenerative Energieformen genutzt werden. Beispielsweise konnten in der Nutzung von Windenergie und Solarenergie, wie z.B. Photovoltaik, große Fortschritte erzielt werden, die deren Nutzung immer attraktiver erscheinen lässt. Ebenso sind Konzepte wie Wellenoder Gezeitenkraftwerke in der Diskussion bzw. in Form vereinzelter Pilotprojekte in der Erprobung. Allen diesen Energieformen ist gemein, dass sie eine nicht oder zumindest nur sehr schwer planbare und insbesondere nicht steuerbare Leistungsverfügbarkeit aufweisen. Beim Einsatz zur Stromerzeugung kann deren Leistungsabgabe nur unvollständig an ein Bedarfsprofil angepasst werden. Beispielsweise kann eine Solaranlage, insbesondere eine Photovoltaikanlage, oder eine Windkraftanlage bei ungünstigen meteorologischen Bedingungen nur begrenzt, wenn überhaupt Leistung abgeben. Eine Überdimensionierung einer derartigen Anlage führt jedoch zu einer sehr schlechten Auslastung des eingesetzten Kapitals bzw. der eingesetzten Ressourcen.

Es ist daher wünschenswert, Möglichkeiten zu finden, die genannten regenerativen Energien trotz ihrer nichtsteuerbaren Leistungsverfügbarkeit zur Deckung des Elektrizitätsbedarfs zu nutzen.

### Darstellung der Erfindung

Hier will die Erfindung Abhilfe schaffen. Der in den Ansprüchen gekennzeichneten Erfindung liegt die Aufgabe zu Grunde, für eine Anlage und ein Verfahren der eingangs genannten Art eine Ausführungsform anzugeben, welche die Nachteile des Standes der Technik zu vermeiden vermag. Die Erfindung soll insbesondere in der Lage sein, beim Einsatz von regenerativen Energieformen mit nichtsteuerbarer Leistungsverfügbarkeit, wie z.B. Windenergie oder Solarenergie, insbesondere zur Stromerzeugung, diese Energieformen möglichst effizient zu nutzen.

Erfindungsgemäß wird diese Aufgabe durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, mit Hilfe der regenerativen Leistung, deren Verfügbarkeit nicht steuerbar ist, für den Fall, dass diese Leistung gerade verfügbar ist, ein Speichergas, insbesondere Luft, zu komprimieren und in einem entsprechenden Speicher zu speichern. Das komprimierte Speichergas kann dann für den Fall, dass ein erhöhter Elektrizitätsbedarf vorliegt, zur Erzeugung elektrischer Leistung genutzt werden. Mit Hilfe des Gasspeichers können die Zeiten für die Verfügbarkeit der regenerativen Leistung von den Zeiten, in denen die Anlage Leistung abgeben kann, entkoppelt werden. Bei hinreichender Speicherbefüllung kann somit völlig unabhängig von der Leistungsverfügbarkeit der regenerativen Energieformen elektrische Energie an den jeweiligen Verbraucher, z.B. an ein öffentliches Stromversorgungsnetz geliefert werden. Die Erfindung beruht somit auf der grundlegenden Überlegung, eine an sich bekannte Kraftwerksanlage, die regenerative Leistung einer Energieform mit nichtsteuerbarer Leistungsverfügbarkeit in elektrische und/oder mechanische Leistung umwandelt, also beispielsweise eine Windkraftanlage oder eine Solaranlage, zum Aufladen einer an sich bekannten Gasspeicherkraftanlage zu verwenden.

Eine derartige Gasspeicherkraftanlage wird üblicherweise auch als "compressed-air-energy-storage-system", kurz CAES-System bezeichnet. Die Grundidee eines herkömmlichen CAES-Systems ist, überschüssige Energie, die von permanent betriebenen herkömmlichen Kraftwerken, wie z.B. Kohlekraftwerken oder Kernkraftwerken, während der Schwachlastzeiten mit niedrigem Strompreis erzeugt wird, zu speichern. Erreicht wird dies dadurch, dass mit Hilfe der preiswerten überschüssigen Energie Luft oder ein anderes Gas unter einem relativ hohen Druck in einen Speicher gepumpt wird. Aus diesem wird die Luft bzw. das entsprechende Speichergas bei Bedarf zur Erzeugung von Strom bei Spitzenlasten, also bei hohem Strompreis wieder entnommen. Das bedeutet, dass die Energie in Form von potentieller Energie abrufbar bevorratet wird. Als Speicher dienen beispielsweise ausgediente Kohle- oder Salzbergwerke oder entsprechend dimensionierte Rohrspeichersysteme. Da das im Gasspeicher bevorratete Gas üblicherweise Luft ist, wird eine derartige Gasspeicherkraftanlage im Allgemeinen auch als Luftspeicherkraftanlage bezeichnet.

Die Erfindung nutzt nun die Erkenntnis, dass sich eine derartige Gasspeicherkraftanlage in besonderer Weise zur Speicherung der nichtsteuerbar verfügbaren regenerativen Leistung genutzt werden kann. Bei der erfindungsgemäßen Anlage wird der Gasspeicher dabei grundsätzlich nicht - wie sonst üblich - in Abhängigkeit des aktuellen Strompreises, also in Abhängigkeit eines aktuellen Stromüberschusses aufgeladen, sondern in Abhängigkeit der Verfügbarkeit der regenerativen Leistung. Hierdurch ergibt sich ein grundsätzlich anderes Arbeitsprinzip für die hier genutzte Gasspeicherkraftanlage.

Als Regenerativwandelvorrichtung kommt grundsätzlich jede geeignete Vorrichtung in Betracht, mit deren Hilfe regenerative Leistung, deren Verfügbarkeit nicht steuerbar ist, in mechanische und/oder elektrische Leistung umgewandelt werden kann. Beispielsweise kann eine derartige Regenerativwandelvorrichtung eine Solaranlage aufweisen, welche die Sonnenenergie in mechanische und/oder elektrische Leistung wandelt. Beispielsweise kann eine derartige Solaranlage als Photovoltaikanlage gestaltet sein, bei der die Sonnenenergie direkt in elektrische Leistung transformiert wird. Zusätzlich oder alternativ kann die Solaranlage auch einen Wärmemotor, wie z.B. einen Stirlingmotor, aufweisen, der die Sonnenenergie direkt in mechanische Leistung, beispielsweise in Form einer Wellenleistung, wandelt. Ebenso kann die Regenerativwandelvorrichtung eine Windkraftanlage aufweisen, welche Windkraft in mechanische und/oder elektrische Leistung wandelt. Des Weiteren sind kombinierte Solar-Wind-Kraftanlagen bekannt bei denen mittels Sonnenenergie ein thermischer Aufwind in einem Kamin generiert wird, wobei der Aufwind seinerseits zum Antrieb eines Propellers oder dergleichen genutzt wird, um daraus mechanische oder elektrische Leistung zu generieren. Des Weiteren sind Wellenkraftanlagen denkbar, welche natürliche Wellen in einem Meer oder Ozean nutzen, um mechanische und/oder elektrische Leistung zu gewinnen. Entsprechendes gilt auch für Gezeitenkraftanlagen, die aus dem Tidenhub mechanische bzw. elektrische Leistung gewinnen.

Grundsätzlich ist es möglich, die Regenerativwandelvorrichtung mit einer ersten Generatoreinrichtung, die zumindest einen Generator aufweist, auszustatten, mit deren Hilfe mechanische Leistung, die zuvor aus der regenerativen Leistung gewandelt worden ist, in elektrische Leistung umzuwandeln. Für die Regenerativwandelvorrichtung kann somit eine herkömmliche, geeignete Kraftwerksanlage verwendet werden. Bei einer derartigen Ausgestaltung der Regenerativwandelvorrichtung ist es zweckmäßig, eine Komprimiervorrichtung, mit deren Hilfe das Speichergas mittels mechanischer und/oder elektrischer Leistung komprimiert werden kann, mit wenigstens einem elektrisch antreibbaren Kompressor auszustatten, der das Speichergas mittels elektrischer Leistung komprimiert. Die Komprimiervorrichtung enthält dadurch einen Aufbau, wie er bei einer herkömmlichen Gasspeicherkraftanlage ohnehin vorhanden ist, so dass auch hier auf bestehende Technologien zurückgegriffen werden kann.

Da bei der vorbeschriebenen, speziellen Ausführungsform die Regenerativwandelvorrichtung ausgangsseitig elektrische Leistung bereitstellt und die Komprimiervorrichtung eingangsseitig elektrische Leistung aufnimmt, ist es ohne weiteres möglich, beliebig große Distanzen zwischen der Regenerativwandelvorrichtung und der Komprimiervorrichtung vorzusehen. Insbesondere kann die zur Wandlung der regenerativen Leistung vorgesehene Kraftwerksanlage an einem dazu in besonderer Weise geeigneten Ort, z.B. in Küstennähe für eine Windkraftanlage bzw. Äquatornähe für eine Solaranlage, installiert werden, während die mit der Komprimiervorrichtung ausgestattete Gasspeicherkraftanlage unabhängig von der zuvor genannten Kraftwerksanlage an einem Ort installiert werden kann, der entweder über einen natürlichen Gasspeicher verfügt, z.B. eine ausgediente Mine für Salz, Kohle und dergleichen, oder in der Nähe eines großen Stromverbrauchers angeordnet ist, wie z.B. eine Großstadt und/oder ein großes Gewerbegebiet. Durch diese Bauweise werden Übertragungsverluste, die bei der Übertragung elektrischer Leistung über größere Distanzen zwangsläufig auftreten, zwischen dem Gasspeicherkraftwerk und dem Verbraucher minimiert, was einen Kostenvorteil bringt, da die Gasspeicherkraftanlage vorzugsweise nur bei Bedarfsspitzen, also bei hohen Strompreisen elektrische Leistung erzeugt. Die Übertragungsverluste zwischen der Regenerativwandelvorrichtung und der Gasspeicherkraftanlage können dann in Kauf genommen werden.

Bevorzugt wird jedoch eine Ausführungsform, bei welcher die Regenerativwandelvorrichtung zumindest eine Antriebswelle aufweist, welche die aus der regenerativen Leistung gewandelte mechanische Leistung bereitstellt, wobei gleichzeitig die Komprimiervorrichtung zumindest einen mechanisch antreibbaren Kompressor aufweist, der das Speichergas mittels mechanischer Leistung komprimiert. Bei einer derartigen Ausführungsform ist es möglich, mit Hilfe der mechanischen Leistung der wenigstens einen Antriebswelle den wenigstens einen Kompressor anzutreiben, ohne dass zuvor mechanische Leistung in elektrische Leistung gewandelt und elektrische Leistung in mechanische Leistung rückgewandelt werden muss. Auf diese Weise können die nicht unerheblichen Umwandlungsverluste zwischen unterschiedlichen Energieformen vermieden werden. Der Wirkungsgrad der Gesamtanlage kann dadurch erheblich verbessert werden.

Grundsätzlich ist es dabei möglich, den Kompressor direkt mit der Antriebswelle anzutreiben, was besonders preiswert realisierbar ist. Alternativ kann auch vorgesehen sein, die Antriebswelle über einen Hydraulikkreis und/oder über ein Getriebe mit dem Kompressor zu koppeln. Die hierbei auftretenden Reibungsverluste sind vergleichsweise gering. Gleichzeitig wird auch hier eine weitere Vereinfachung des konstruktiven Aufwands erreicht.

Für den Betrieb der Anlage ist es zweckmäßig, den aktuellen Leistungsbedarf eines öffentlichen Stromversorgungsnetzes bzw. den aktuellen Strompreis zu berücksichtigen. Beispielsweise wird das im Gasspeicher gespeicherte komprimierte Gas nur bei Spitzenlasten bzw. nur bei hohen Strompreisen zur Erzeugung elektrischer Leistung entspannt. Sofern die Regenerativwandelvorrichtung aus der regenerativen Leistung direkt oder über die erste Generatoreinrichtung elektrische Leistung erzeugt, kann es auch hier zweckmäßig sein, diese Leistung bei Spitzenlasten bzw. bei hohen Strompreisen direkt in das öffentliche Stromversorgungsnetz einzuspeisen und nur bei Schwachlastzeiten bzw. niedrigen Strompreisen der Gasspeicherkraftanlage zum Komprimieren und Speichern von Speichergas zu nutzen. Bei einer derartigen Betriebsweise ergibt sich eine betriebswirtschaftliche Optimierung der Gesamtanlage.

Weitere wichtige Vorteile und Merkmale der vorliegenden Erfindung ergeben sich aus den Unteransprüchen, aus den Zeichnungen und aus der nachfolgenden Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen, jeweils schematisch,
- Fig. 1: ein Diagramm, in dem ein Tagesgang verfügbarer Leistung aus Windenergie und eine Leistungsnachfrage dargestellt sind,
- Fig. 2: eine stark vereinfachte Prinzipdarstellung einer erfindungsgemäßen Anlage,
- Fig. 3A bis 3B: Ansichten auf Ausschnitte einer Anlage gemäß Fig. 2, jedoch bei anderen Ausführungsformen.

Für das Verständnis der Erfindung nicht unmittelbar notwendige Elemente sind weggelassen. Die Ausführungsbeispiele sind rein instruktiv zu verstehen und sollen nicht zu einer Einschränkung der in den Ansprüchen gekennzeichneten Erfindung herangezogen werden.

### Wege zur Ausführung der Erfindung

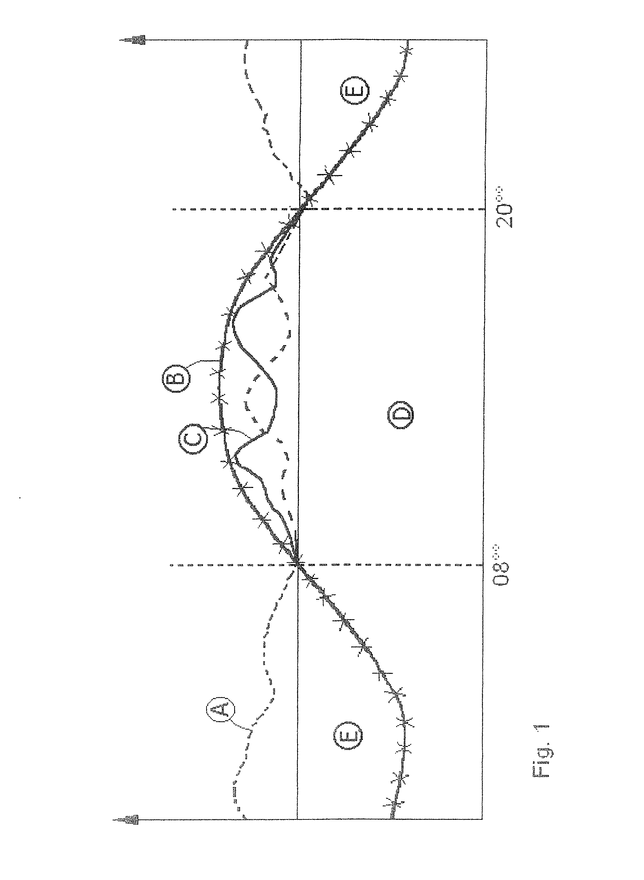

Fig. 1 zeigt einen typischen Tagesgang von Leistungsverfügbarkeit und Leistungsanforderung. Die Verläufe sind rein qualitativ zu verstehen und sollen nicht zu einer quantitativen Analyse herangezogen werden. Die mit A gekennzeichnete gestrichelte Kurve stellt den Verlauf der Verfügbarkeit an Leistung einer regenerativen Energieform dar, deren Leistungsverfügbarkeit nicht steuerbar ist. Beispielsweise handelt es sich hier um den Leistungsverlauf von Windenergie. Ebenso könnte es sich um den Leistungsverlauf von Solarenergie oder Wellenenergie handeln. Die mit B gekennzeichnete Kurve repräsentiert den Tagesgang des Leistungsverbrauchs bzw. des Leistungsbedarfs. D ist eine Grundlast, die beispielsweise mittels konventioneller Kraftwerke bereitgestellt wird. Es ist also während des Tages die mit C bezeichnete Leistung zusätzlich zu decken, während nachts die mit E bezeichnete Leistung "überschüssig" ist.

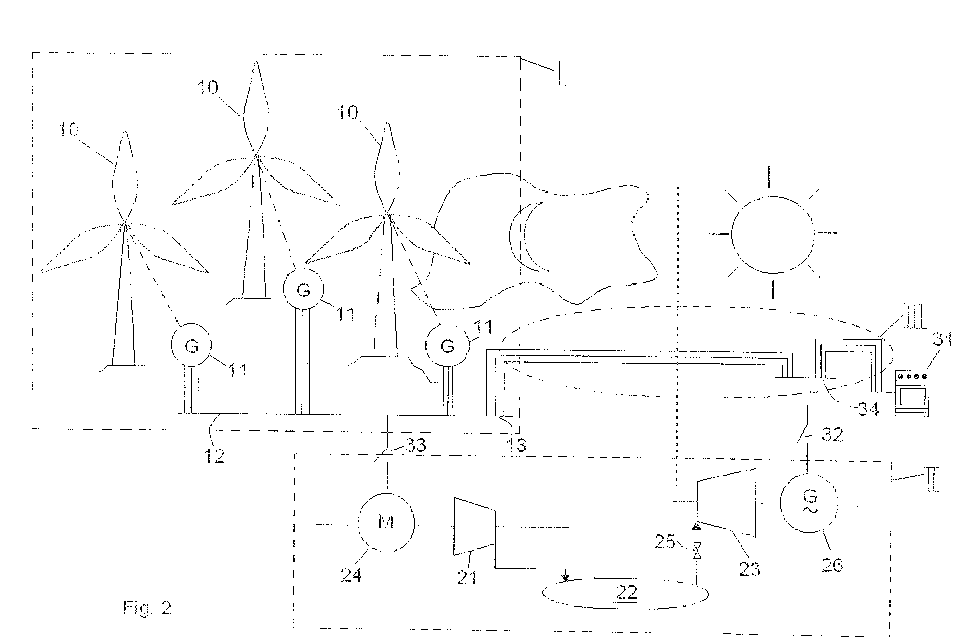

Fig. 2 stellt eine erfindungsgemäße Anlage zur Nutzung einer regenerativen Energieform mit nichtsteuerbarer Leistungsverfügbarkeit vereinfacht dar. Ohne Beschränkung der Allgemeinheit wird dieses Beispiel anhand der Windenergie erläutert. Es ist klar, dass dieses Beispiel grundsätzlich auch auf Solarenergie oder auf eine andere nichtsteuerbare regenerative Energie übertragbar ist. Die Anlage umfasst vereinfacht ausgedrückt ein Primär-Energieumwandlungssystem I und ein Sekundär-Energieumwandlungssystem II. Diese Systeme I und II sind in Fig. 2 jeweils durch Rahmen symbolisiert, die mit unterbrochener Linie gezeichnet sind. Das Primärsystem I umfasst eine nicht näher bezeichnete Regenerativwandelvorrichtung, die hier im wesentlichen durch eine Windkraftanlage gebildet ist. Dementsprechend umfasst die Regenerativwandelvorrichtung bzw. das Primärsystem I vorzugsweise mehrere Windräder oder Windturbinen 10, welche die Leistung der Windenergie in mechanische Wellenleistung umsetzen und damit Generatoren 11 antreiben, die daraus elektrische Leistung erzeugen. Diese elektrische Leistung kann über eine hier nicht dargestellte Leistungsverteilungsund/oder Schalteinrichtung in ein öffentliches Stromversorgungsnetz III eingespeist und an Verbraucher 31 weitergeleitet werden.

Die Generatoren 11 des Primärsystems I bilden dabei eine erste Generatoreinrichtung, die aus mechanischer Leistung, welche die Windkraftanlage der regenerativen Windleistung entzieht, in elektrische Leistung umwandelt.

Das Primärsystem I kann hier grundsätzlich einer konventionellen Windkraftanlage entsprechen.

Die potentielle Leistungsverfügbarkeit der Windenergie und damit das Leistungspotential des Primärsystems I ist nicht steuerbar und nicht an das Anforderungsprofil der Verbraucher 31 anpassbar. Erfindungsgemäß ist daher das Sekundärsystem II vorgesehen, welches in Zeiten hoher Windenergieverfügbarkeit und niedrigem Leistungsbedarf Energie zu speichern vermag und diese umgekehrt bei hohem Leistungsbedarf und/oder niedriger Windenergieverfügbarkeit wieder abgeben kann. Das Sekundärsystem II kann hier grundsätzlich einer konventionellen Gasspeicherkraftanlage entsprechen.

Das Sekundärsystem II umfasst eine Komprimiervorrichtung mit wenigstens einem Kompressor 21, eine Speichervorrichtung mit wenigstens einem Gasspeicher 22 sowie eine Entspannungsvorrichtung mit wenigstens einer Turbine 23. Es ist klar, dass die Komprimiervorrichtung auch andere Kompressionseinrichtungen aufweisen kann. Ebenso kann auch die Entspannungsvorrichtung andere Entspannungseinrichtungen besitzen. Die Komprimiervorrichtung 21 kann ein Speichergas, vorzugsweise Luft aus der Umgebung unter Zuhilfenahme mechanischer und/oder elektrischer Leistung komprimieren. Der Gasspeicher 22 kann das jeweilige Speichergas unter Druck bevorraten. Die Entspannungsvorrichtung 23 kann das komprimierte Speichergas entspannen und dabei mechanische und/oder elektrische Leistung freigeben.

Der Druckspeicher oder Gasspeicher 22 kann durch eine geeignete natürliche oder künstlich geschaffene Kavität gebildet sein. Beispielsweise kann ein relativ großvolumiges Röhrensystem quasi an jedem beliebigen Ort installiert werden, so dass der Standort des Sekundärsystems II nicht zwangsläufig auf die Lokalität einer natürlichen Kavität (Höhle, Bergwerk) angewiesen ist. Im Übrigen kann zur Speicherung des jeweiligen Gases auch auf Technologien zur Speicherung von Erdgas zurückgegriffen werden, z.B. auf überirdische oder unterirdische Gaskessel.

Das Sekundärsystem II bzw. dessen Entspannungsvorrichtung ist mit einer zweiten Generatoreinrichtung versehen, die hier zumindest einen Generator 26 umfasst. Die zweite Generatoreinrichtung wandelt mechanische Leistung, die von der Entspannungsvorrichtung bzw. von deren Turbine 23 durch Entspannung des komprimierten Speichergases generiert worden ist, in elektrische Leistung, die wieder in das Stromversorgungsnetz III eingespeist werden kann.

Das Primärsystem I wird zur maximalen Ausnutzung des Leistungspotentials der Windenergie betrieben. Im Unterschied dazu wird das Sekundärsystem II in Abhängigkeit des Leistungsbedarfs bzw. Strompreises betriebswirtschaftlich optimiert betrieben.

Fig. 2 zeigt dabei eine besondere Ausführungsform, bei welcher das Primärsystem I bzw. die Regenerativwandelvorrichtung, hier die Windkraftanlage, über eine eigene (erste) Generatoreneinrichtung verfügt, bzw. selbst elektrische Leistung erzeugen und dementsprechend in das Stromversorgungsnetz III einspeisen kann.

Wenn die Leistungserzeugung der Regenerativwandelvorrichtung größer ist als der Leistungsbedarf des Stromversorgungsnetzes III, wird ein Schalter 33 geschlossen. Der wenigstens eine Kompressor 21 der Komprimiervorrichtung ist hier so gestaltet, dass er elektrisch antreibbar ist. Zweckmäßig ist hierzu ein Elektromotor 24 vorgesehen. Bei geschlossenem Schalter 33 wird der wenigstens eine Elektromotor 24 bestromt, so dass dieser den zugehörigen Kompressor 21 antreibt. In Folge dessen wird der Gasspeicher 22 mit komprimiertem Gas, also in der Regel mit Druckluft aufgeladen.

Wenn umgekehrt die Leistungsanforderungen der Verbraucher 31 größer ist als die vom Primärsystem I bzw. von dessen Regenerativwandelvorrichtung erzeugte elektrische Leistung, so wird durch Öffnen eines Regelorgans 25 die wenigstens eine Turbine 23 der Entspannungsvorrichtung angefahren. Hierdurch wird der wenigstens eine Generator 26 der zweiten Generatoreinrichtung angetrieben, der daraufhin eine entsprechend elektrische Leistung generiert. In diesem Fall ist der Schalter 33 geöffnet, so dass die Komprimiervorrichtung außer Betrieb ist. Im Unterschied dazu ist ein weiterer Schalter 32 dann geschlossen, so dass die vom Generator 26 erzeugte elektrische Leistung in das Stromversorgungsnetz III eingespeist werden kann. Dementsprechend kann das Sekundärsystem II eine Differenz zwischen der Leistungserzeugung des Primärsystems I und der Leistungsanforderung des Stromversorgungsnetzes III überbrücken.

In Fällen, in denen eine erhöhte Leistungsanforderung des Stromversorgungsnetzes III vorliegt und in denen gleichzeitig regenerative Windleistung zur Verfügung steht, kann bei der hier gezeigten Anlage sowohl vom Primärsystem I als auch vom Sekundärsystem II elektrische Leistung in das Stromversorgungsnetz III eingespeist werden. Vorteilhaft kann es außerdem sein, sowohl den Motor 24 als auch den Generator 26 zu betrieben, gegebenenfalls mit unterschiedlichen Leistungen, um Leistungstransienten auf der Angebots- wie auf der Nachfrageseite möglichst flexibel abzufedern.

Die Größe des Gasspeichers oder Druckspeichers 22 muss einen guten Kompromiss zwischen den Kosten und der zu speichernden Energie darstellen. Da jeweils nur die Differenz zwischen der Leistung der Regenerativwandelvorrichtung und den Netzanforderungen mit Hilfe der Gasspeicherkraftanlage überbrückt werden muss, kann der Druckspeicher 22 für eine bevorzugte Ausführungsform zweckmäßig so dimensioniert sein, dass das während vier bis acht Maximalleistungs-Betriebsstunden der Regenerativwandelvorrichtung erzeugbare Druckgas gespeichert werden kann. In einer weiteren bevorzugten Ausführungsform sind die Entspannungsvorrichtung bzw. die wenigstens eine Turbine 23 und die Regenerativwandelvorrichtung so aufeinander abgestimmt, dass die Nennleistung der Regenerativwandelvorrichtung bzw. des Primärsystems I etwa drei bis vier mal größer ist als die Nennleistung der Entspannungsvorrichtung bzw. des Sekundärsystems II.

Die vorliegende Erfindung vereinigt auf höchst vorteilhafte und synergetisch zusammenwirkende Weise Kraftwerksanlagen zur Nutzung von Regenerativenergien, deren Leistungsverfügbarkeit nicht steuerbar ist, und Gasspeicherkraftanlagen. Derartige Gasspeicherkraftanlagen sind erheblich weniger planungsintensiv und mit geringerem Aufwand zu erstellen als beispielsweise Pumpspeicherwerke. Daneben können Gasspeicherkraftanlagen bei der erfindungsgemäßen Anlage grundsätzlich an einem nahezu beliebigen Ort erstellt werden. Hierdurch sind Anordnungen möglich, welche die Kapazität vorhandener Übertragungsleitungen möglichst effizient nutzen bzw. diese Übertragungsleitungen eben möglichst gering nutzen. So werden in einer bevorzugten Ausführungsform der vorliegenden Erfindung die Regenerativwandelvorrichtung, die Komprimiervorrichtung, die Speichervorrichtung und die Entspannungsvorrichtung an einem gemeinsamen Ort angeordnet, was in einer kompakten Gesamtanlage resultiert, die im Speicherbetrieb keine Übertragungskapazität erfordert.

Alternativ kann die Regenerativwandelvorrichtung an einem Ort mit hoher Verfügbarkeit der jeweiligen regenerativen Energieform angeordnet werden beispielsweise an einem Ort mit viel und möglichst gleichmäßigem Wind oder an einem Ort mit viel Sonneneinstrahlung. Zumindest die Entspannungsvorrichtung, zweckmäßig auch die Komprimiervorrichtung und die Speichervorrichtung können dann an einem auch weit entfernten Ort mit hohem Leistungsbedarf errichtet werden, beispielsweise in der Nähe einer Stadt oder eines Industriezentrums. Da die Regenerativwandelvorrichtung bei der in Fig. 2 gezeigten Ausführungsform ohnehin über eine erste Generatoreinrichtung verfügt und somit aus der regenerativen Leistung selbst elektrisch Leistung erzeugen kann, wird die Gesamtanlage zweckmäßig so betrieben, dass der Gasspeicher nur bei Schwachlastzeiten befüllt wird. Da somit der Speicherbetrieb in Schwachlastzeiten stattfindet, werden die Übertragungskapazitäten in diesen Schwachlastzeiten, zum Beispiel nachts, genutzt, wenn ohnehin Kapazitäten frei sind. Andererseits findet die Stromerzeugung zu Hochlastzeiten nahe beim Verbraucher statt, was Übertragungskapazitäten schont. Gegenüber der Nutzung einer Pumpspeicheranlage stellt dies einen signifikanten wirtschaftlichen und technischen Vorteil dar.

Bei der Nutzung eines Salzstocks oder einer anderen natürlichen Kaverne als Druckspeicher 22 kann auch eine größere Anzahl von Regenerativwandelvorrichtungen oder Primärsystemen I mit einem derartigen Druckspeicher 22 zusammenwirken. Der großvolumige Gasspeicher 22 kann dann mit mehreren kleineren oder mit einem größeren Sekundärsystem II zusammenwirken.

Des Weiteren ist es ebenfalls möglich, die Turbine 23 als Heißgasturbine auszugestalten, wobei dann zwischen dem Druckspeicher 22 und der Turbine 23 eine entsprechende Heizeinrichtung angeordnet ist. Diese Heizeinrichtung kann beispielsweise mit einer Feuerung oder mit einer externen oder auch katalytischen Erhitzung des Speichergases arbeiten. Hierzu kann beispielsweise auch wieder Solarenergie genutzt werden. Damit kann die Leistung der gesamten Anlage erhöht werden. In einer dann möglichen Betriebsweise wird der wenigstens eine Kompressor 21 über die vom Primärsystem I gelieferte Energie angetrieben. Durch die zusätzliche Wärmezuführung kann die Leistungsdichte der Gesamtanlage erhöht werden. Die Leistungsabgabe des Sekundärsystems II wird gegenüber der vom Primärsystem I abgegebenen Leistung z.B. um 40% bis 50% erhöht.

Bei einer Windkraftanlage bzw. bei deren Windrädern oder Windturbinen 10 befindet sich der jeweilige Generator 11 üblicherweise in einer Gondel, an welcher der jeweilige Rotor oder Propeller gelagert ist.

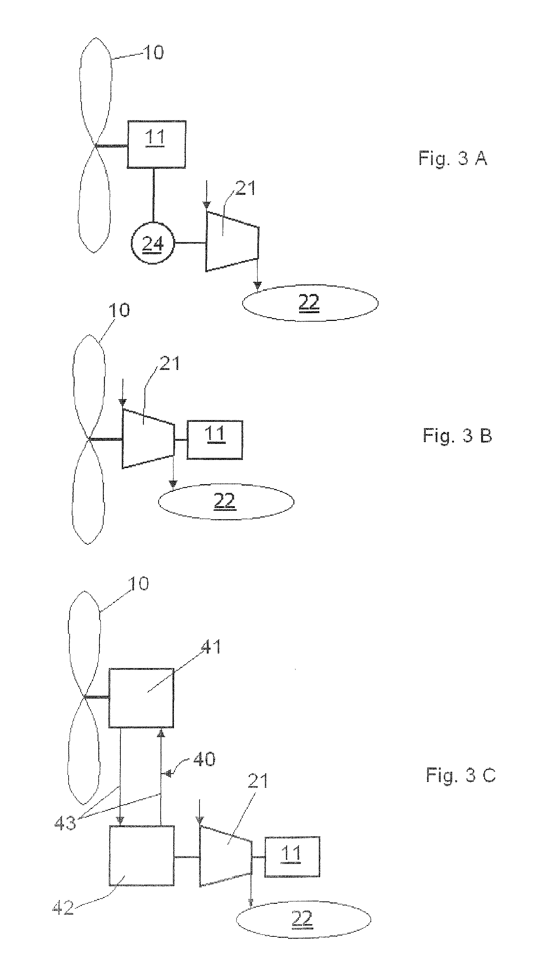

Fig. 3A zeigt eine Ausführungsform, bei welcher die Regenerativwandelvorrichtung die regenerative Leistung in eine Wellenleistung wandelt und mit diese Wellenleistung unmittelbar den Generator 11 antreibt. Zumindest im Speicherbetrieb der Gasspeicherkraftanlage wird diese elektrische Leistung auf einen elektrisch antreibbaren Kompressor 21 übertragen, um diesen damit anzutreiben. Zweckmäßig umfasst der jeweilige Kompressor 21 hierzu den Elektromotor 24. Das heißt, die vom Generator 11 gelieferte elektrische Leistung wird im Elektromotor 24 wieder in Wellenleistung umgewandelt, welche den Kompressor 21 antreibt. Bei einer derartigen Bauweise sind nur relativ geringe Modifikationen erforderlich, um die erfindungsgemäße Anlage aufzubauen. Denn einerseits kann auf eine herkömmliche Kraftwerksanlage zur Nutzung einer nichtsteuerbaren Energieform, wie zum Beispiel auf eine Windkraftanlage, zurückgegriffen werden, die ausgangsseitig elektrische Leistung bereitstellt. Zum anderen kann auf eine konventionelle Gasspeicherkraftanlage zurückgegriffen werden, die eingangsseitig mit elektrischer Leistung arbeitet.

Es ist klar, dass die Übertragung der mechanischen Leistung zwischen dem Propeller und dem Generator 11 über ein Getriebe erfolgen kann. Des Weiteren ist es grundsätzlich möglich, den Generator 11 nicht in der Gondel, sondern am Boden anzuordnen. Die Übertragung der mechanischen Leistung kann dann über ein geeignetes Getriebe erfolgen oder gemäß einer besonders vorteilhaften Ausführungsform mittels eines Hydraulikkreises zwischen dem Propeller und dem Generator 11 realisiert werden. Dementsprechend können die Generatoren 11 bei der Ausführungsform gemäß Fig. 2 beabstandet zu den Windturbinen 10 angeordnet sein.

Gemäß Fig. 3B kann bei einer besonders vorteilhaften Weiterbildung die Komprimiervorrichtung zumindest teilweise in die Regenerativwandelvorrichtung integriert werden oder umgekehrt. Fig. 3B zeigt eine Variante, bei welcher die Regenerativwandelvorrichtung beispielsweise mit dem Windrad 10 aus der jeweiligen regenerativen Leistung eine mechanische Leistung, hier Wellenleistung erzeugt, welche unmittelbar zum Antreiben des wenigstens einen Kompressors 21 der Komprimiereinrichtung benutzt werden kann. Mit anderen Worten, die Regenerativwandelvorrichtung treibt eine Antriebswelle an und diese treibt direkt oder indirekt die Komprimiervorrichtung an. Auf diese Weise können im Unterschied zu der in Fig. 3A gezeigten Ausführungsform zum einen die Umwandlungsverluste mechanisch-elektrisch im Generator 11 und zum anderen die Umwandlungsverluste elektrischmechanisch im Elektromotor 24 vermieden werden, wodurch sich eine beträchtliche Wirkungsgradsteigerung erzielen lässt. Optional kann die Regenerativwandelvorrichtung zusätzlich mit einem Generator 11 ausgestattet sein, um bedarfsabhängig und/oder in Abhängigkeit der zur Verfügung stehenden regenerativen Leistung nur den Kompressor 21 oder nur den Generator 11 oder sowohl den Kompressor 21 als auch den Generator 11 anzutreiben. Es ist klar, dass in diesem Fall der Generator 11 nur dazu angetrieben wird, um die damit erzeugte elektrische Leistung direkt in das Stromversorgungsnetz III einzuspeisen. Beispielsweise ist regenerative Leistung verfügbar und der Druckspeicher 22 ist befüllt, so dass die überschüssige Leistung an das Stromversorgungsnetz III abgegeben werden kann.

Bei einer Windkraftanlage kann es zweckmäßig sein, den Kompressor 21 und/oder den Generator 11 nicht in der Gondel, in welcher der Propeller gelagert ist, unterzubringen. Fig. 3C zeigt eine bevorzugte Weiterbildung, bei welcher die von der Regenerativwandelvorrichtung erzeugte mechanische Leistung mit Hilfe eines Hydraulikkreises 40 auf den Kompressor 21 übertragen wird. Beispielsweise enthält dieser Hydraulikkreis 40 eine Hydraulikpumpe 41, die von der mechanischen Leistung der Regenerativwandelvorrichtung, z.B. über eine geeignete Antriebswelle, mechanisch angetrieben werden kann. Des Weiteren enthält der Hydraulikkreis 40 einen Hydraulikmotor 42, der ausgangsseitig mechanische Leistung, hier Wellenleistung bereitstellt, mit welcher der Kompressor 21 angetrieben werden kann. Hydraulikmittelleitungen 43 sorgen dabei für die Leistungsübertragung und für die Zirkulation des jeweiligen Hydraulikfluids. Auch bei dieser Ausführungsform werden die Wandlungsverluste mechanisch-elektrisch und umgekehrt vermieden, um mit Hilfe des Kompressors 21 den Druckspeicher 22 zu befüllen. Zusätzlich kann auch hier optional ein Generator 11 vorgesehen sein, um bei überschüssiger mechanischer Leistung elektrische Leistung direkt in das Stromversorgungsnetz III einzuspeisen.

Bei den in den Fig. 3B und 3C gezeigten Ausführungsformen kann die regenerative Leistung mit einem erheblich höheren Wirkungsgrad zum Beladen des Speichers 22 genutzt werden. Ermöglicht wird dies durch eine Modifikation einer an sich konventionellen Kraftwerksanlage zur Nutzung regenerativer, nichtsteuerbarer Energieformen, indem diese so gestaltet wird, dass sie mechanische Leistung zum Antrieb der Komprimiervorrichtung bereitstellt. Im Gegenzug dazu wird auch eine an sich konventionelle Gasspeicherkraftanlage dahingehend modifiziert, dass deren Komprimiervorrichtung unmittelbar mit mechanischer Leistung angetrieben werden kann. Der jeweils optional vorgesehene Generator 11 dient dann nur noch dazu, gegebenenfalls auftretende Leistungsüberschüsse in elektrische Leistung umzuwandeln und in das Stromversorgungsnetz III einzuspeisen. Bei einer vorteilhaften Weiterbildung kann auch vorgesehen sein, den jeweiligen Generator 11 als Elektromotor zu betreiben, um bei fehlender Leistungsverfügbarkeit der regenerativen Energie und bei einem Leistungsüberschuss im Stromversorgungsnetz III den preiswerten Schwachlaststrom zur Beladung des Speichers 22 zu nutzen. In entsprechender Weise kann natürlich auch der Elektromotor 24 bei der Ausführungsform der Fig. 2 und 3A zu diesem Zweck genutzt werden. Es ist klar, dass bei den Ausführungsformen der Fig. 3B und 3C zwischen der Regenerativwandelvorrichtung und dem Kompressor 21 bzw. zwischen der Regenerativwandelvorrichtung und der Hydraulikpumpe 41 bzw. zwischen dem Hydraulikmotor 42 und dem Kompressor 21 ein Getriebe angeordnet sein kann.

Grundsätzlich kann die Anlage so betrieben werden, dass die Regenerativwandelvorrichtung die gesamte aus der regenerativen Leistung gewandelte elektrische und/oder mechanische Leistung zum Aufladen des Druckspeichers 22 an die Komprimiervorrichtung abgibt. Sobald der Druckspeicher 22 gefüllt ist, kann - sofern ein entsprechender Generator 11 vorgesehen ist - die dann noch erzeugte elektrische Leistung an das Stromversorgungsnetz III abgegeben werden.

Im Falle einer Leistungsanforderung des Stromversorgungsnetzes III kann diese zunächst vollständig von der Entspannungsvorrichtung 23 bedient werden, indem der Gasspeicher 22 in entsprechender Weise entspannt wird. Eine derartige Betriebsweise ist regelungstechnisch besonders einfach zu handhaben.

Bevorzugt wird jedoch eine Ausführungsform, bei welcher der ökonomische und/oder der ökologische Gesamtwirkungsgrad der Anlage berücksichtigt wird. Sofern die regenerative Leistung zur Verfügung steht, kann die daraus generierte elektrische Leistung zusätzlich zu der von der Gasspeicherkraftanlage generierten elektrischen Leistung in das Stromversorgungsnetz III eingespeist werden. Darüber hinaus können transiente Zustände auftreten, bei denen Leistungsbedarf und Leistungsverfügbarkeit es ermöglichen, mit Hilfe der Regenerativwandlungsvorrichtung einerseits den Leistungsbedarf zu decken und andererseits die Speicherkraftanlage simultan aufzuladen. Bei einem derartigen Betriebszustand kann dann die Entspannungsvorrichtung 23 deaktiviert sein.

Des Weiteren können bei einer derartigen gemischten Betriebsweise, bei welcher sowohl die Entspannungsvorrichtung 23 als auch die Regenerativwandlungsvorrichtung elektrische Leistung in das Stromversorgungsnetz III einspeisen, Energieumwandlungsverluste reduziert werden, was den Gesamtwirkungsgrad der Anlage verbessert. Für die Steuerung bzw. Regelung der Betriebsweisen der Regenerativwandlungsvorrichtung und der Komprimiervorrichtung sowie der Entspannungsvorrichtung kann eine geeignete Leistungsverteilungsvorrichtung vorgesehen sein, welche die Betriebsweisen der einzelnen Komponenten der Anlage koordiniert.

Beispielsweise ist die erste Generatoreinrichtung der Regenerativwandlungsvorrichtung an eine Stromübertragungsleitung 12 angeschlossen bzw. anschließbar, die ihrerseits über eine Umspanneinrichtung 13 an das öffentliche Stromversorgungsnetz III angeschlossen oder anschließbar ist. Die genannte Stromübertragungsleitung 12 ist dann wie die Komprimiervorrichtung 21 ausschaltbar bzw. trennbar. Des Weiteren kann die Entspannungsvorrichtung 23 bzw. deren Generator 26 an die genannte Stromübertragungsleitung 12 angeschlossen oder anschließbar sein. Alternativ oder zusätzlich kann die Entspannungsvorrichtung oder deren Generator 26 über eine andere Umspanneinrichtung 34 direkt an das öffentliche Stromversorgungsnetz III angeschlossen oder anschließbar sein.

Wenn die Leistungsanforderung an die Anlage kleiner ist als die verfügbare regenerative Leistung des Primärsystems I bzw. der Regenerativwandlungsvorrichtung, wird die Leistungsanforderung unmittelbar vom Primärsystem I gedeckt. Mit einer die Leistungsanforderung übersteigenden Leistung wird die Komprimiervorrichtung 21 angetrieben und der Druckspeicher 22 aufgeladen. Die Entspannungsvorrichtung 23 ist dann außer Betrieb. Wenn die Leistungsanforderung größer ist als die verfügbare Leistung des Primärsystems I, befindet sich der wenigstens eine Kompressor 21 außer Betrieb und die gesamte Leistung der Primärsystems I wird in das Stromversorgungsnetz III eingespeist. Die Differenzleistung wird dann von der Entspannungsvorrichtung 23 bereitgestellt und ebenfalls in das Stromversorgungsnetz III eingespeist. Dabei wird der Druckspeicher 22 über die Entspannungsvorrichtung 23 allmählich entladen. Selbstverständlich kann in dieser Betriebsweise auch ein Zwischenmodus realisiert werden, bei dem die Entspannungs- und Komprimiervorrichtung nicht ganz außer Betrieb genommen werden, sondern stattdessen in einem Bereitschaftsmodus weiter betrieben werden, wodurch eine schnellere Reaktion auf Transienten der Leistungsanforderung und/oder der Leistungsverfügbarkeit möglich ist. Dieser Betriebsmodus weist geringere Verluste auf, erfordert jedoch eine aufwändigere Regelung.

Die vorangehend beschriebene Schaltung kann auch für einen Bereitschaftsbetrieb verwendet werden. Dabei wird das Sekundärsystem II einerseits durch Betrieb der Komprimiervorrichtung 21 mit Druckluft beschickt, andererseits ist auch die Entspannungsvorrichtung 23 in Betrieb. Dabei ist mit Vorteil der Druckspeicher 22 weder ganz geladen noch ganz entladen. Bei einer transienten Leistungsanforderung kann dann die Kompressionsvorrichtung 21 abgeschaltet werden, wo mit deren Leistungsaufnahme durch eine entsprechend erhöhte Leistungsabgabe am Generator 26 schlagartig zusätzlich den Verbrauchern zur Verfügung steht. Bei einer plötzlichen Verminderung der Leistungsanforderung im Stromversorgungsnetz III kann umgekehrt der Generator 26 der Entspannungsvorrichtung 23 vom Stromversorgungsnetz III getrennt werden. Die Anlage bietet somit ein besonders hohes Maß an Betriebsflexibilität.

Bei der Ausführungsform gemäß Fig. 2 liefern die einzelnen Generatoren 11 die erzeugte elektrische Leistung auf eine gemeinsame Stromübertragungsleitung 12. Diese ist an die der Regenerativwandlungsvorrichtung zugeordnete Umspanneinrichtung 13 angeschlossen, über welche die von der Regenerativwandlungsvorrichtung erzeugte elektrische Leistung in das öffentliche Stromversorgungsnetz III eingespeist werden kann. Bei der in Fig. 2 gezeigten Ausführungsform ist die Entspannungsvorrichtung bzw. der wenigstens eine Generator 26 ausgangsseitig an eine andere Umspanneinrichtung 34 angeschlossen, um die von der Entspannungsvorrichtung bzw. deren wenigstens einem Generator 26 erzeugte elektrische Leistung ebenfalls in das Stromversorgungsnetz III einzuspeisen.

Bei einer bevorzugten Ausführungsform der vorliegenden Erfindung ist die Entspannungsvorrichtung 23 bzw. deren wenigstens einer Generator 26 ebenfalls an die gemeinsame Stromübertragungsleitung 12 angeschlossen, so dass der wenigstens einer Generator 26 die von ihm produzierte elektrische Leistung ebenfalls über die dann gemeinsame Umspanneinrichtung 13 der Stromübertragungsleitung 12 in das Stromversorgungsnetz III einspeisen zu können. Bei einer derartigen Ausführungsform werden die Entspannungsvorrichtung bzw. deren wenigstens eine Generator 26 und die Komprimiervorrichtung bzw. deren wenigstens einer Elektromotor 24 zweckmäßig nicht gleichzeitig betrieben, sondern vorzugsweise alternativ.

Zweckmäßig können dann Elektromotor 24 und Generator 26 zu einer Motor-Generator-Einheit 24, 26 zusammengefasst werden, die wahlweise als Generator 26 oder als Elektromotor 24 betrieben werden kann.

### Bezugszeichenliste

- A: Verlauf der Verfügbarkeit von Windenergieleistung
- B: Tageslauf des Bedarfs an elektrische Leistung
- C: zu deckende Zusatzleistung
- D: Grundlast
- E: Überschüssige Leistung
- 10: Windrad/Windturbine
- 11: Generator
- 12: Stromübertragungsleitung
- 13: Umspanneinrichtung
- 21: Kompressor
- 22: Gasspeicher/Druckspeicher
- 23: Turbine
- 24: Elektromotor
- 25: Regelorgan
- 26: Generator
- 31: Verbraucher
- 32: Schalter
- 33: Schalter
- 34: Umspanneinrichtung
- 40: Hydraulikkreis
- 41: Hydraulikpumpe
- 42: Hydraulikmotor
- 43: Hydraulikleitung
- I: Primärsystem
- II: Sekundärsystem
- III: öffentliches Stromversorgungsnetz

## Patentansprüche

1. Anlage zur Nutzung regenerativer Energieformen mit nicht steuerbarer Leistungsverfügbarkeit,
- mit einer Regenerativwandelvorrichtung (10) zum Umwandeln von regenerativer Leistung nichtsteuerbarer Verfügbarkeit in mechanische und/oder elektrische Leistung,
- mit einer Komprimiervorrichtung (21) zum Komprimieren eines Speichergases mittels der mechanischen und/oder elektrischen Leistung,
- mit einer Speichervorrichtung (22) zum Speichern des komprimierten Speichergases und
- mit einer Entspannungsvorrichtung (23) zum Entspannen des komprimierten Speichergases unter Abgabe einer mechanischen und/oder elektrischen Leistung.

2. Anlage nach Anspruch 1,
**dadurch gekennzeichnet,**
**dass** die Regenerativwandelvorrichtung eine Photovoltaikanlage und/oder eine Solaranlage und/oder eine Windkraftanlage (10) und/oder eine Wellenkraftanlage und/oder eine Gezeitenkraftanlage aufweist.

3. Anlage nach Anspruch 1 oder 2,
**dadurch gekennzeichnet,**
**dass** die Regenerativwandelvorrichtung eine wenigstens einen Generator (11) aufweisende erste Generatoreinrichtung zum Umwandeln von aus der regenerativen Leistung gewandelter mechanischer Leistung in elektrische Leistung aufweist.

4. Anlage nach Anspruch 3,
**dadurch gekennzeichnet,**
**dass** die Komprimiervorrichtung wenigstens einen elektrisch antreibbaren Kompressor (21) aufweist, der das Speichergas mittels elektrischer Leistung komprimiert.

5. Anlage nach einem der Ansprüche 1 bis 4,
**dadurch gekennzeichnet,**
**dass** die Entspannungsvorrichtung (23) eine wenigstens einen Generator (26) aufweisende zweite Generatoreinrichtung zum Umwandeln von aus dem komprimierten Speichergas gewandelter mechanischer Leistung in elektrische Leistung aufweist.

6. Anlage nach Anspruch 4 oder 5,
**dadurch gekennzeichnet,**
**dass** eine Leistungsverteilungsvorrichtung vorgesehen ist, die es ermöglicht, mit der von der ersten Generatoreinrichtung gewandelten elektrischen Leistung bedarfsabhängig die Komprimiervorrichtung (21) und ein öffentliches Stromversorgungsnetz (III) zu versorgen und/oder die von der zweiten Generatoreinrichtung gewandelten elektrischen Leistung in ein öffentliches Stromversorgungsnetz (III) einzuspeisen.

7. Anlage nach einem der Ansprüche 1 bis 6,
**dadurch gekennzeichnet,**
**dass** die Regenerativwandelvorrichtung zumindest von der Entspannungsvorrichtung (23) örtlich getrennt angeordnet ist.

8. Anlage nach Anspruch 7,
**dadurch gekennzeichnet,**
**dass** die Regenerativwandelvorrichtung an einem Ort mit erhöhter Leistungsverfügbarkeit der regenerativen Energieform angeordnet ist, während zumindest die Entspannungsvorrichtung (23) an einem Ort mit einem erhöhten Bedarf an elektrischer Leistung angeordnet ist.

9. Anlage nach einem der Ansprüche 1 bis 8,
**dadurch gekennzeichnet,**
- **dass** die Regenerativwandelvorrichtung zumindest eine Antriebswelle aufweist, welche die aus der regenerativen Leistung gewandelte mechanische Leistung bereit stellt,
- **dass** die Komprimiervorrichtung wenigstens einen mechanisch antreibbaren Kompressor (21) aufweist, der das Speichergas mittels mechanischer Leistung komprimiert.

10. Anlage nach Anspruch 9,
**dadurch gekennzeichnet,**
- **dass** der wenigstens eine Kompressor (21) direkt von der wenigstens einen Antriebswelle angetrieben ist, oder
- **dass** der wenigstens eine Kompressor (21) über einen Hydraulikkreis (40) und/oder über ein Getriebe indirekt mit der wenigstens einen Antriebswelle antriebsgekoppelt ist.

11. Anlage nach einem der Ansprüche 1 bis 10,
**dadurch gekennzeichnet,**
**dass** eine Nennleistung der Regenerativwandelvorrichtung, insbesondere drei bis vier mal größer ist als eine Nennleistung der Entspannungsvorrichtung (23).

12. Anlage nach einem der Ansprüche 1 bis 11,
**dadurch gekennzeichnet,**
**dass** die Speichervorrichtung (22) so dimensioniert ist, dass sie das während vier bis acht Vorlastbetriebsstunden der Regenerativwandelvorrichtung komprimierte Speichergas speichern kann.

13. Verfahren zur Nutzung regenerativer Energieformen mit nichtsteuerbarer Leistungsverfügbarkeit,
- bei dem regenerative Leistung nichtsteuerbarer Verfügbarkeit in mechanische und/oder elektrische Leistung gewandelt wird,
- bei dem ein Speichergas mittels dieser mechanischen und/oder elektrischen Leistung komprimiert und gespeichert wird,
- bei dem dieses komprimierte Speichergas in mechanische und/oder elektrische Leistung gewandelt wird.

14. Verfahren nach Anspruch 13,
**dadurch gekennzeichnet,**
**dass** die regenerative Leistung Sonnenstrahlung und/oder Wind und/oder Wellen und/oder Gezeiten entnommen wird.

15. Verfahren nach Anspruch 13 oder 14,
**dadurch gekennzeichnet,**
- **dass** die aus der regenerativen Leistung gewandelte elektrische Leistung in Abhängigkeit eines Leistungsbedarfs eines öffentlichen Stromversorgungsnetzes (III) und/oder in Abhängigkeit eines momentanen Strompreises im Stromversorgungsnetz (III) zum Komprimieren und Speichern des Speichergases oder zur Einspeisung in das Stromversorgungsnetz (III) genutzt wird, und/oder
- **dass** in Abhängigkeit des Leistungsbedarfs eines öffentlichen Stromversorgungsnetzes (III) und/oder in Abhängigkeit eines momentanen Strompreises im Stromversorgungsnetz (III) aus dem komprimierten Speichergas elektrische Leistung gewandelt und in das Stromversorgungsnetz (III) eingespeist wird.

16. Verfahren nach einem der Ansprüche 13 bis 15,
**dadurch gekennzeichnet,**
- **dass** die regenerative Leistung in mechanische Leistung gewandelt wird,
- **dass** diese mechanische Leistung zum Komprimieren des Speichergases genutzt wird.

17. Verwendung einer Kraftwerksanlage, die regenerative Leistung einer Energieform mit nichtsteuerbarer Leistungsverfügbarkeit in elektrische und/oder mechanische Leistung umwandelt, zum Aufladen einer Gasspeicherkraftanlage.

18. Verwendung nach Anspruch 17,
**dadurch gekennzeichnet,**
**dass** eine Regenerativwandelvorrichtung der Kraftwerksanlage, die regenerative Leistung in mechanische Leistung wandelt, direkt oder über einen Hydraulikkreis (40) und/oder über ein Getriebe indirekt mit einer Komprimiervorrichtung der Gasspeicherkraftanlage antriebsgekoppelt ist, die mittels mechanischer Leistung ein Speichergas komprimiert.
